# EUROPÄISCHE PATENTSCHRIFT

(11) **EP 3 864 286 B1**
(45) Veröffentlichungstag und Bekanntmachung des Hinweises auf die Patenterteilung: **29.11.2023**
(21) Anmeldenummer: 19794892.0
(22) Anmeldetag: 08.10.2019
(51) Int. Cl.: F03D 7/04, G06F 21/62, F03D 17/00

(54) **VERFAHREN UND ANORDNUNG ZUM ZUGRIFF AUF SCADA-DATEN VON WINDENERGIEANLAGEN**
METHOD AND ASSEMBLY FOR ACCESSING SCADA DATA OF WIND TURBINES
PROCÉDÉ ET ENSEMBLE PERMETTANT D'ACCÉDER À DES DONNÉES SCADA D'ÉOLIENNES

(30) Priorität: 10.10.2018 DE 102018007996
(43) Veröffentlichungstag der Anmeldung: 18.08.2021
(73) Patentinhaber: Siemens Gamesa Renewable Energy Service GmbH, 20097 Hamburg (DE)
(72) Erfinder: RUST, Leander, 20259 Hamburg (DE); HARDEN, Hennig, 22457 Hamburg (DE)
(74) Vertreter: Glawe, Delfs, Moll
(86) Internationale Anmeldenummer: PCT/EP2019/077175
(87) Internationale Veröffentlichungsnummer: WO 2020/074485

(56) Entgegenhaltungen:
- DE-A1-102012 204 446
- DE-A1-102015 007 649
- US-A1- 2013 290 705
- US-A1- 2016 327 025

## Beschreibung

Die Erfindung betrifft ein Verfahren zum geschützten Zugriff auf SCADA-Daten einer Windenergieanlage, sowie eine zur Durchführung dieses Verfahrens ausgebildete Anordnung. Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren -je nach Bauart des Generators auch wenigstens teilweise direkt - in ein elektrisches Netz eingespeist werden kann. Der Rotor umfasst mehrere (in der Regel drei), sich radial von der Rotorachse erstreckende Rotorblätter, die gegenüber einer Rotornabe drehbar befestigt sind, um den Anstellwinkel der Rotorblätter einzustellen. Windenergieanlagen verfügen über eine Vielzahl von Sensoren, die von einer Anlagensteuerung bei der Steuerung der Windenergieanlage berücksichtigt werden.

Es ist bekannt, Windenergieanlagen bzw. deren Anlagensteuerungen in ein SCADA-System einzubinden, bei denen die diversen Betriebsparameter der Windenergieanlage an eine übergeordnete Steuerungseinheit übermittelt und von der ggf. zu berücksichtigende Steuerungsbefehle und Sollwerte empfangen werden.

Die von der Anlagensteuerung einer übergeordneten Steuerungseinheit zur Verfügung gestellten Daten können die von den Sensoren erfassten Messwerte, von der Anlagensteuerung an einzelne Komponenten der Windenergieanlage übermittelte Steuerbefehle und/oder Sollwerte, sowie sonstige, den Istzustand der Windenergieanlage beschreibende Informationen umfassen.

Diese Daten - ggf. zusammen mit den Steuerungsbefehlen oder Sollwerten der übergeordneten Steuerungseinheit - werden regelmäßig für die Erstellung von Gutachten benötigt. Dazu müssen die Daten belegbar von der zu begutachtenden Windenergieanlage stammen und dürfen nicht manipuliert worden sein. Gleichzeitig sollen die Daten nur berechtigen Nutzern, wie bspw. beauftragen Gutachtern, zur Verfügung stehen. Die berechtigten Nutzer können die Daten dann weiterverarbeiten, um so bspw. mögliche Fehlfunktionen der Windenergieanlage aufzudecken oder Optimierungen für den Betrieb der Windenergieanlage zu entwickeln. Die US 2016/327025 A1 beschreibt eine Anordnung und ein Verfahren, mit dem eine Windenergieanlage im Fernzugriff durch einen dazu berechtigten Nutzer zurückgesetzt werden kann

Aufgabe der vorliegenden Erfindung ist es, ein Verfahren und eine Anordnung zu schaffen, die auf einfache Weise einen geschützten Zugriff auf SCADA-Daten einer Windenergieanlage gestatten.

Gelöst wird diese Aufgabe durch ein Verfahren gemäß Anspruch 1 sowie eine Anordnung gemäß Anspruch 10. Vorteilhafte Weiterbildungen sind Gegenstand der abhängigen Ansprüche.

Demnach betrifft die Erfindung ein Verfahren zum geschützten Zugriff auf SCADA-Daten einer Windenergieanlage, wobei die Windenergieanlage zur Erfassung von SCADA-Daten ausgebildet ist, gekennzeichnet durch die Schritte:
a) erfassen von SCADA-Daten durch die Windenergieanlage und ergänzen der erfassten SCADA-Daten durch Stammdaten der Windenergieanlage durch die Windenergieanlage;
b) digitales signieren und übermitteln der SCADA- und Stammdaten durch die Windenergieanlage an einen Broker-Server zur Weiterverarbeitung und Speicherung;
c) erstellen eines Metadatensatzes aus den empfangenen SCADA- und Stammdaten mit Informationen zum Umfang und Eigenschaften der SCADA- und Stammdaten durch den Broker-Server;
d) übermitteln des Metadatensatzes an wenigstens einen Nutzer-Client;
bei Interesse an den durch den Metadatensatz identifizierten SCADA- und Stammdaten:
e) digitales signieren des Metadatensatzes und übermitteln des signierten Metadatensatzes durch den Nutzer-Client an den Broker-Server;
f) erstellen und digital signieren eines Auslieferungsdatensatzes umfassend den vom Nutzer-Client signierten Metadatensatz und die zu dem Metadatensatz gehörigen SCADA- und Stammdaten durch den Broker-Server; und
g) übermitteln des signierten Auslieferungsdatensatzes an den Nutzer-Client.

Die Erfindung betrifft weiterhin eine Anordnung umfassend eine Windenergieanlage, einen Broker-Server und einen Nutzer-Client, die zur Durchführung des erfindungsgemäßen Verfahrens gemäß geeignet ausgebildet und miteinander datenverbunden sind.

Zunächst werden einige in Zusammenhang mit der Erfindung verwendete Begriffe erläutert.

Bei "SCADA-Daten" handelt es sich um von der Anlagensteuerung der Windenergieanlage während des Betriebs erfasste Daten, wie bspw. Messdaten von Sensoren, Ist- und Sollwerte von steuerbaren Komponenten sowie ggf. externer Steuerungsbefehle, wie sie für andere SCADA-Anwendungen üblich sind.

Mit "Stammdaten" einer Windenergieanlage sind die Windenergieanlage grundsätzlich kennzeichnenden und regelmäßig in der Anlagensteuerung einer Windenergieanlage hinterlegten Daten bezeichnet. Zu diesen Stammdaten können neben einer eindeutigen Identifikation der Windenergieanlage, bspw. in Form einer eindeutigen Seriennummer, noch grundsätzlich Informationen zum Anlagentyp, zur Anlagenkonfiguration, wie bspw. Turmhöhe, Blattlänge und Nennleistung, und/oder zum Anlagenstandort, bspw. in Form von geografischen Koordination, gehören.

Bei einer "digitalen Signatur" handelt es sich um einen auf Basis beliebiger Daten und einem geheimen Schlüssel erzeugte Prüfinformation, die von einem Empfänger anhand eines zum geheimen Schlüssel gehörenden öffentlichen Schlüssels überprüft werden kann. Durch die Überprüfung der digitalen Signatur durch einen öffentlichen Schlüssel kann nicht nur die Herkunft der Daten, sondern auch deren Integrität festgestellt werden.

Bei einer "Distributed-Ledger-Datenbank" handelt es sich dezentral auf vernetzten Computern geführte Datenbanken, die zu einer Übereinkunft (Konsensus) über die Reihenfolge von Datenbankeinträgen und -veränderungen kommen. Ein Beispiel für eine solche Distributed-Ledger-Datenbank ist eine Blockchain. Bei einer "Blockchain" handelt es sich um eine kontinuierlich erweiterbare Liste von Datensätzen, welche mittels kryptografischer Verfahren manipulationssicher miteinander verkettet sind. Jeder Datensatz umfasst dabei typischerweise einen kryptografisch sicheren Streuwert eines oder mehrerer vorhergehenden Datensätze, einen Zeitstempel und die eigentlichen Nutzdaten, in diesem Fall Hashwert und Bewertungsgrößen. Die Blockchain kann außerdem dezentral verwaltet und gespeichert werden, wodurch deren Sicherheit nochmals gesteigert werden kann.

Das erfindungsgemäße Verfahren ermöglicht den einfachen geschützten Zugriff auf SCADA-Daten einer Windenergieanlage.

Die SCADA-Daten werden, wie aus dem Stand der Technik grundsätzlich bekannt, durch die Windenergieanlage bzw. deren Anlagensteuerung erfasst. Um eine spätere Zuordnung der SCADA-Daten zu der Windenergieanlage oder zumindest zum Typ der Windenergieanlage zu ermöglichen, werden die erfassten SCADA-Daten noch durch Stammdaten der Windenergieanlage ergänzt.

Anschließend wird das Datenpaket aus SCADA- und Stammdaten digital signiert, wozu bspw. auf einen in der Anlagensteuerung hinterlegten geheimen Schlüssel zurückgegriffen werden kann. Die entsprechend signierten SCADA- und Stammdaten werden dann an einen Broker-Server zur Weiterverarbeitung und Speicherung übermittelt. Dabei kann vom Broker-Server die Signatur der SCADA- und Stammdaten überprüft werden, um so die Herkunft und Integrität der empfangenen Daten sicherzustellen.

Es ist möglich, dass die empfangenen Stammdaten um weitere, im Broker-Server hinterlegte Informationen ergänzt werden, die sich aufgrund der übermittelten Stammdaten eindeutig der Anlage, von welcher die Daten stammen, zuordnen lassen. Auf diese Weise kann Bandbreite bei der Datenübertragung zwischen Anlagensteuerung und Broker-Server reduziert werden.

Ein Teil der Weiterverarbeitung seitens des Broker-Servers besteht in der Erstellung eines Metadatensatzes aus den empfangenen SCADA- und Stammdaten. Die in dem Datensatz enthaltenen Metadaten umfassen Informationen zum Umfang und Eigenschaften der SCADA- und Stammdaten, also insbesondere Informationen, welche Daten von welcher Windenergieanlage über welchen Zeitraum zur Verfügung stehen. Ein Metadatensatz kann als Inhaltsverzeichnis der SCADA- und Stammdaten aufgefasst werden.

Der so erstellte Metadatensatz wird anschließend an wenigstens einen Nutzer-Client übermittelt. Dabei ist unerheblich, ob der Metadatensatz unaufgefordert an den wenigstens einen Nutzer-Client gesendet wird (Push-Verfahren) oder ob der Nutzer-Client aktiv den Metadatensatz abrufen muss (Pull-Verfahren), bspw. indem der Metadatensatz aktiv über eine Webseite heruntergeladen wird. Es kann selbstverständlich auch eine Vielzahl von Nutzer-Clients vorgesehen sein.

Am Nutzer-Client liegen nun Informationen vor, welche SCADA- und Stammdaten bei dem Broker-Server verfügbar sind. Nur wenn Interesse an den einem Metadatensatz zugehörigen SCADA- und Stammdaten, wird das Verfahren fortgesetzt. Das Interesse kann dabei manuell durch einen Nutzer mit geeigneter Eingabe am Nutzer-Client bekundet werden oder es wird automatisch durch den Nutzer-Client festgestellt, dass der erhaltene Metadatensatz bestimmte Kriterien erfüllt, bspw. einer bestimmten vorgegebenen Windenergieanlage zuordenbar ist.

Besteht Interesse an den zu einem Metadatensatz zugehörigen SCADA- und Stammdaten, wird der Metadatensatz durch den Nutzer-Client digital signiert. Dazu kann der Nutzer-Client über einen geeigneten privaten Schlüssel verfügen. Anschließend wird der signierte Metadatensatz an den Broker-Server übermittelt.

Nach Erhalt eines signierten Metadatensatzes erstellte Broker-Server einen Auslieferungsdatensatz, der neben zu dem Metadatensatz gehörigen SCADA- und Stammdaten auch den durch den Nutzer-Client signierten Metadatensatz umfasst. Der Auslieferungsdatensatz wird dann durch den Broker-Server digital signiert, und anschließend an den Nutzer-Client übermittelt.

Das erfindungsgemäße Verfahren bietet den Vorteil, dass der Übermittlungspfad zwischen Windenergieanlage und Nutzer-Client über den Broker-Server durch digitale Signaturen vor Manipulationen geschützt ist. Außerdem ist eine Nachverfolgbarkeit der Auslieferungsdatensätze gegeben, da die digitale Signatur des Nutzer-Clients von der digitalen Signatur durch den Broker-Server mit erfasst ist und somit nicht verändert oder entfernt werden kann, ohne die Broker-Signatur ungültig zu machen. Bei einer Weitergabe der Auslieferungsdatensätze an unberechtigte Dritte kann an dem weitergegebenen Datensatz abgelesen werden, über welchen Nutzer-Client und somit über welche Kanäle die Datensätze zu ggf. unberechtigten Dritte gelangt sind.

Auch wenn die Weitergabe von Daten aus dem Auslieferungsdatensatz ohne die beiden Signaturen grundsätzlich möglich sein mag, ist in diesem Fall die Integrität des Auslieferungsdatensatzes und der darin enthaltenen SCADA- und Stammdaten nicht mehr gesichert. Die Daten aus dem Auslieferungsdatensatz sind ohne die beiden Signaturen praktisch wertlos, da eine gutachterliche, aber auch eine sonstige inhaltliche Verwertung der Daten, bspw. für Optimierungszwecke, mangels gesicherter Datenintegrität nicht mehr zulässig oder tatsächlich brauchbar ist.

Durch das erfindungsgemäße Verfahren wird also indirekt sichergestellt, dass die SCADA- und Stammdaten letztendlich nur durch die tatsächlich berechtigten Nutzer verwendet werden, da eine Weitergabe der Daten ohne die erfindungsgemäß vorgesehenen Signaturen praktisch wertlos macht und bei einer Weitergabe eines Auslieferungsdatensatzes inkl. der Signaturen der Nutzer-Client, der die Daten angefragt hat, eindeutig identifizierbar ist. Letzteres kann bspw. für vertragliche Sanktionen genutzt werden.

Es ist bevorzugt, wenn bei der Erstellung des Auslieferungsdatensatzes die Signatur der SCADA- und Stammdaten durch die Windenergieanlage entfernt wird. Dadurch wird sichergestellt, dass die SCADA- und Stammdaten nicht in einer digital signierten Form aus einem Auslieferungsdatensatz herausgelöst werden können, an deren Signatur sich die Integrität der Daten ablesen ließe. Auch wenn in diesem Fall ein Nutzer darauf vertrauen muss, dass seitens des Broker-Servers keine Manipulation der Daten vorgenommen wird, ist es vorteilhaft, die Integrität der SCADA- und Stammdaten im Auslieferungsdatensatz ausschließlich in Kombination mit dem vom Nutzer-Client digital signierten Metadatensatz zu garantieren.

Die Übermittlung von unsignierten und signierten Metadatensätzen zwischen Broker-Server und Nutzer-Clients erfolgt bevorzugt in Form von Datensätzen einer Distributed-Ledger-Datenbank, vorzugsweise einer Blockchain, auf die sowohl Broker-Server als auch Nutzer-Clients Zugriff haben. Durch die Verwendung einer Distributed-Ledger-Datenbank kann die Sicherheit in der Datenübertragung, insbesondere der Schutz vor Manipulationen, weiter erhöht werden.

Es ist bevorzugt, wenn vor der Erstellung und Fixierung des Auslieferungsdatensatzes eine in der Distributed-Ledger-Datenbank als Smart-Contract hinterlegte Transaktion ausgeführt wird und der Auslieferungsdatensatz nur bei positiven Abschluss der Transaktion erstellt und signiert wird. Mögliche Transaktionen können finanzielle Transaktionen sowie die Überprüfung der Berechtigung eines Nutzer-Clients zum Abruf der angeforderten SCADA- und Stammdaten sein. Durch das abwickeln von entsprechenden Transaktionen bevor ein Auslieferungsdatensatz erstellt und signiert wird, kann sichergestellt werden, dass Auslieferungsdatensätze nur dann an einen Nutzer-Client ausgeliefert werden, wenn dieser dafür erforderlichen Voraussetzungen erfüllt.

Denn unabhängig davon, wie die Transaktion ausgestaltet ist, insbesondere welche Prüfungen sie umfasst, ist es bevorzugt, wenn die Transaktion durch Übermittlung einer vom Broker-Server elektronisch (gegen-)signierten Version des vom Nutzer-Client elektronisch signierten Metadatensatzes ausgelöst wird. Dadurch kann sichergestellt werden, dass beispielsweise finanzielle Transaktionen zwischen Nutzer-Client und Broker-Server nur dann ausgeführt werden, wenn von beiden "Parteien" eine gültige Signatur vorliegt.

Es ist bevorzugt, wenn wenigstens zwei Metadatensätze aus den empfangenen SCADA- und Stammdaten mit Informationen zum Umfang und Eigenschaften der SCADA- und Stammdaten durch den Broker-Server erzeugt werden, wobei die Metadatensätze unterschiedliche Teilbereiche der SCADA- und Stammdaten abdecken und bei der Erzeugung eines Auslieferungsdatensatzes nur die von dem durch den Nutzer-Client signierten Metadatensatz abgedeckten SCADA- und Stammdaten berücksichtigt werden. Durch die Erzeugung mehrere Metadatensätze, die jeweils unterschiedliche SCADA- und Stammdaten abdecken, können den Nutzer-Clients unterschiedliche, auf verschiedene Nutzergruppen zugeschnittene Auslieferungsdatensätze bereitgestellt werden.

Die Metadatensätze können Informationen zur Windenergieanlage, von der die SCADA- und Stammdaten stammen, Umfang der Daten und/oder das Zeitintervall der verfügbaren SCADA-Daten umfassen. Die Stammdaten umfassen vorzugsweise eine eindeutige Kennung, die geografische Position, den Anlagentyp und/oder die grundsätzliche Konfiguration der Windenergieanlage. Die SCADA-Daten können von der Windenergieanlage erfasste Messwerte und/oder von der Windenergieanlage empfangene externe Steuerungsbefehle oder Sollwertvorgaben umfassen.

Zur Erläuterung der erfindungsgemäßen Anordnung wird auf die vorstehenden Ausführungen verwiesen.

Die Erfindung wird nun anhand einer vorteilhaften Ausführungsform unter Bezugnahme auf die beigefügte Zeichnung beschrieben. Es zeigt:

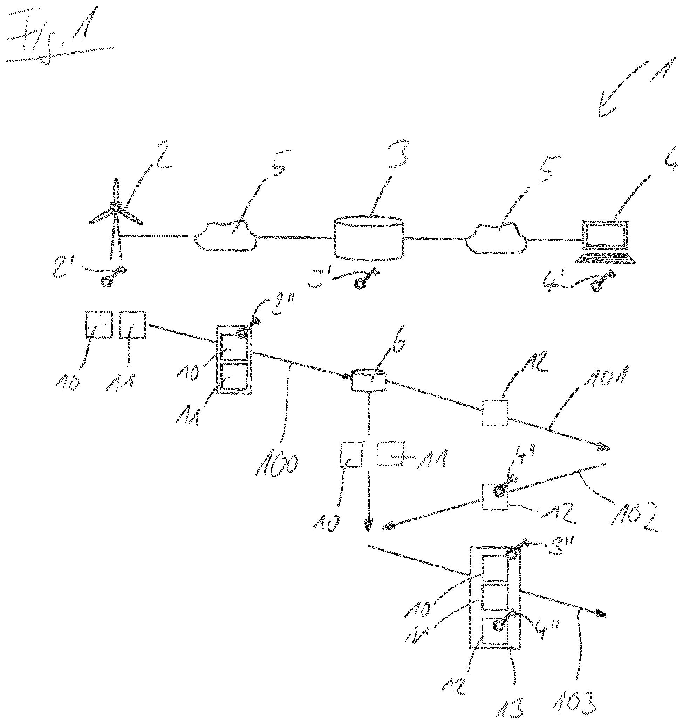

- Figur 1:: eine schematische Darstellung einer zur Durchführung des erfindungsgemäßen Verfahrens ausgebildeten Anordnung.

In Figur 1 ist eine erfindungsgemäße Anordnung 1 gezeigt. Die Anordnung 1 umfasst eine Windenergieanlage 2, einen Broker-Server 3 sowie einen Nutzer-Client 4. Die Windenergieanlage 2 und der Broker-Server 3, sowie der Broker-Server 3 und der Nutzer-Client 4, sind jeweils über das Internet 5 miteinander datenverbunden. Die Windenergieanlage 2, der Broker-Server 3 und der Nutzer-Client 4 verfügen jeweils über einen geheimen Schlüssel 2`, 3`, 4', der zum digitalen Signieren von Daten geeignet ist.

In der Windenergieanlage 2 bzw. deren Anlagensteuerung (nicht dargestellt) sind Stammdaten 10 zur Windenergieanlage 2 hinterlegt. Die Stammdaten 10 umfassend eine eindeutige Kennung, den Anlagentyp und die grundsätzliche Konfiguration (insbesondere also Informationen über Turmhöhe, Blattlänge und Nennleistung) der Windenergieanlage 2. Außerdem werden bei der Windenergieanlage noch SCADA-Daten 11 erfasst, die sich aus sämtlichen von der Windenergieanlage erfassten Messwerten und von der Windenergieanlage empfangenen externen Sollwertvorgaben zusammensetzen.

Die SCADA- und Stammdaten 10, 11 werden in regelmäßigen Abständen über das Internet 5 an den Broker-Server 3 gesandt (Schritt 100). Dazu werden die SCADA- und Stammdaten 10, 11 gemeinsam mit einer digitalen Signatur 2" auf Basis des geheimen Schlüssels 2' der Windenergieanlage versehen.

Nach Empfang wird die digitale Signatur 2" durch den Broker-Server 3 überprüft und die korrekt signierten Daten in dem Speicher 6 des Broker-Servers 3 abgelegt, wobei die Signatur 2" verworfen wird.

Außerdem wird aus den empfangenen SCADA- und Stammdaten 10, 11 ein Metadatensatz 12 generiert, der neben der eindeutigen Kennung der Windenergieanlage 10 auch noch Informationen zu dem durch die SCADA-Daten abgedeckten Zeitraum sowie dem inhaltlichen Umfang der SCADA-Daten umfassen. Dieser Metadatensatz 12 wird an den Nutzer-Client 4 gesendet (Schritt 101).

Wird seitens des Nutzer-Clients 4 automatisiert oder manuell festgestellt, dass Interesse an den SCADA- und Stammdaten besteht, wird der empfangene Metadatensatz 12 durch eine auf dem geheimen Schlüssel 4' des Nutzer-Clients 4 basierende digitale Signatur 4" versehen und an den Broker-Server 3 zurückübermittelt (Schritt 102).

Nach Erhalt des signierten Metadatensatzes 12 lädt der Broker-Server 3 die zu dem Metadatensatz 12 gehörigen SCADA- und Stammdaten 10, 11 aus dem Speicher 6 und erstellt daraus einen Auslieferungsdatensatz 13.

Der Auslieferungsdatensatz 13 umfasst dabei den vom Nutzer-Client 4 signierten Metadatensatz 12 inklusive dessen Signatur und die zu diesem Metadatensatz 12 gehörigen SCADA- und Stammdaten 10, 11. Der Auslieferungsdatensatz 13 wird durch eine auf dem geheimen Schlüssel 3' des Broker-Servers 3 basierenden Signatur 3" ergänzt, bevor er an den Nutzer-Client 4 übermittelt wird (Schritt 103).

Der Nutzer-Client 4 erhält somit Zugriff auf die SCADA- und Stammdaten 10, 11 der Windenergieanlage 2, deren Integrität durch die Signatur 3" des Broker-Servers 3 gesichert ist. Die Gefahr einer unbefugten Weitergabe der Daten ist dabei reduziert, da die SCADA- und Stammdaten 10, 11 entweder nur ohne Signatur weitergegeben werden können, womit deren Integrität jedoch nicht mehr gesichert ist, oder die Herkunft der Daten aufgrund der enthaltenen Signatur 4" des Nutzer-Clients 4 dauerhaft zurückverfolgt werden kann, was wiederum zu vertraglich vereinbarten Sanktionen des Nutzers führen kann.

Insbesondere die Übermittlung des Metadatensatzes 12 in Schritten 101 und 102 wird vorzugsweise über eine Blockchain abgewickelt, wodurch die Sicherheit der Datenübertragung weiter erhöht werden kann.

## Patentansprüche

1. Verfahren zum geschützten Zugriff auf SCADA-Daten (11) einer Windenergieanlage (2), wobei die Windenergieanlage (2) zur Erfassung von SCADA-Daten (11) ausgebildet ist, umfassend:
a) erfassen von SCADA-Daten (11) durch die Windenergieanlage (2) und ergänzen der erfassten SCADA-Daten (11) durch Stammdaten (10) der Windenergieanlage (2) durch die Windenergieanlage (2);
b) digitales signieren und übermitteln (100) der signierten SCADA- und Stammdaten (10, 11) durch die Windenergieanlage (2) an einen Broker-Server (3) zur Weiterverarbeitung und Speicherung;
c) erstellen eines Metadatensatzes (12) aus den empfangenen SCADA- und Stammdaten (10, 11) mit Informationen zum Umfang und Eigenschaften der SCADA- und Stammdaten (10, 11) durch den Broker-Server (3);
d) übermitteln (101) des Metadatensatzes (12) an wenigstens einen Nutzer-Client (4);
das Verfahren **gekennzeichnet durch** die Schritte:
bei Interesse an den durch den Metadatensatz (12) identifizierten SCADA- und Stammdaten (10, 11):
e) digitales signieren des Metadatensatzes (12) und übermitteln (102) des signierten Metadatensatzes (12) durch den Nutzer-Client (4) an den Broker-Server (3);
f) erstellen und digital signieren eines Auslieferungsdatensatzes (13) umfassend den vom Nutzer-Client (4) signierten Metadatensatz (12) und die zu dem Metadatensatz (12) gehörigen SCADA- und Stammdaten (10, 11) durch den Broker-Server (3); und
g) übermitteln des signierten Auslieferungsdatensatzes (13) an den Nutzer-Client (4).

2. Verfahren nach Anspruch 1, wobei bei Erstellung des Auslieferungsdatensatzes (13) die Signatur (2") der SCADA- und Stammdaten (10, 11) durch die Windenergieanlage (2) entfernt wird.

3. Verfahren nach Anspruch 1 oder 2, wobei eine Übermittlung von unsignierten und signierten Metadatensätzen (12) in Form von Datensätzen einer Distributed-Ledger-Datenbank, vorzugsweise einer Blockchain, erfolgt, auf die Broker-Server (3) und Nutzer-Client (4) Zugriff haben.

4. Verfahren nach Anspruch 3, wobei vor Erstellung und Signierung des Auslieferungsdatensatzes (13) eine in der Distributed-Ledger-Datenbank als Smart-Contract hinterlegte Transaktion ausgeführt wird und der Auslieferungsdatensatz (13) nur bei positiven Abschluss der Transaktion erstellt und signiert wird.

5. Verfahren nach Anspruch 4, wobei die Transaktion durch Übermittlung einer vom Broker-Server (3) digital (gegen-)signierten Version des vom Nutzer-Client (4) digital signierten Metadatensatzes (12) ausgelöst wird.

6. Verfahren nach einem der vorstehenden Ansprüche, wobei wenigstens zwei Metadatensätze (12) aus den empfangenen SCADA- und Stammdaten (10, 11) mit Informationen zum jeweiligen Umfang und Eigenschaften der SCADA- und Stammdaten (10, 11) durch den Broker-Server erzeugt werden, wobei die Metadatensätze (12) unterschiedliche Teilbereiche der SCADA- und Stammdaten (10, 11) abdecken und bei der Erzeugung eines Auslieferungsdatensatzes (13) nur die von dem durch den Nutzer-Client (4) signierten Metadatensatz (12) abgedeckten SCADA- und Stammdaten (10, 11) berücksichtigt werden.

7. Verfahren nach Anspruch 6, wobei die Metadatensätze (12) Informationen zur Windenergieanlage (2), von der die SCADA- und Stammdaten (10, 11) stammen, Umfang der Daten und/oder das Zeitintervall der verfügbaren SCADA-Daten (11) umfasst.

8. Verfahren nach einem der vorstehenden Ansprüche, wobei die Stammdaten (10) eine eindeutige Kennung, die geografische Position, den Anlagentyp und/oder die grundsätzliche Konfiguration der Windenergieanlage (2) umfassen.

9. Verfahren nach einem der vorstehenden Ansprüche, wobei die SCADA-Daten (11) von der Windenergieanlage (2) erfasste Messwerte und/oder von der Windenergieanlage (2) empfangene externe Steuerungsbefehle oder Sollwertvorgaben umfasst.

10. Anordnung (1) umfassend eine Windenergieanlage (2), einen Broker-Server (3) und einen Nutzer-Client (4), die zur Durchführung eines Verfahrens gemäß einem der vorstehenden Ansprüche geeignet ausgebildet und miteinander datenverbunden sind.

## Claims

1. Method for accessing SCADA data (11) of a wind turbine (2) in a protected manner, wherein the wind turbine (2) is designed to capture SCADA data (11), comprising:
a) the wind turbine (2) capturing SCADA data (11) and the wind turbine (2) supplementing the captured SCADA data (11) with master data (10) of the wind turbine (2);
b) the wind turbine (2) digitally signing and transmitting (100) the signed SCADA and master data (10, 11) to a broker server (3) for further processing and storage;
c) the broker server (3) creating a metadata record (12) from the received SCADA and master data (10, 11) with information relating to the scope and properties of the SCADA and master data (10, 11);
d) transmitting (101) the metadata record (12) to at least one user client (4);
the method **characterized by** the steps of:
in the event of interest in the SCADA and master data (10, 11) identified by the metadata record (12):
e) the user client (4) digitally signing the metadata record (12) and transmitting (102) the signed metadata record (12) to the broker server (3);
f) the broker server (3) creating and digitally signing a delivery data record (13) comprising the metadata record (12) signed by the user client (4) and the SCADA and master data (10, 11) belonging to the metadata record (12); and
g) transmitting the signed delivery data record (13) to the user client (4).

2. Method according to Claim 1,
wherein
when creating the delivery data record (13), the signature (2'') of the SCADA and master data (10, 11) is removed by the wind turbine (2).

3. Method according to Claim 1 or 2,
wherein
unsigned and signed metadata records (12) are transmitted in the form of data records of a distributed ledger database, preferably a blockchain, to which the broker server (3) and the user client (4) have access.

4. Method according to Claim 3,
wherein
before creating and signing the delivery data record (13), a transaction stored in the distributed ledger database as a smart contract is performed and the delivery data record (13) is created and signed only in the event of a positive conclusion of the transaction.

5. Method according to Claim 4,
wherein
the transaction is initiated by transmitting a version of the metadata record (12) digitally signed by the user client (4), which version is digitally (counter)signed by the broker server (3).

6. Method according to one of the preceding claims,
wherein
at least two metadata records (12) are generated by the broker server from the received SCADA and master data (10, 11) with information relating to the respective scope and properties of the SCADA and master data (10, 11), wherein the metadata records (12) cover different sections of the SCADA and master data (10, 11) and only the SCADA and master data (10, 11) which are covered by the metadata record (12) signed by the user client (4) are taken into account when generating a delivery data record (13).

7. Method according to Claim 6,
wherein
the metadata records (12) comprise information relating to the wind turbine (2), from which the SCADA and master data (10, 11) come, the scope of the data and/or the time interval of the available SCADA data (11).

8. Method according to one of the preceding claims,
wherein
the master data (10) comprise a unique identifier, the geographical position, the turbine type and/or the basic configuration of the wind turbine (2).

9. Method according to one of the preceding claims,
wherein
the SCADA data (11) comprise measured values captured by the wind turbine (2) and/or external control commands or setpoint value presets received by the wind turbine (2).

10. Assembly (1) comprising a wind turbine (2), a broker server (3) and a user client (4), which are suitably designed to carry out a method according to one of the preceding claims and have a data connection to one another.

## Revendications

1. Procédé d'accès sécurisé à des données SCADA (11) d'un aérogénérateur (2), l'aérogénérateur (2) étant configuré pour l'acquisition de données SCADA (11), comprenant :
a) acquisition de données SCADA (11) par l'aérogénérateur (2) et complétion des données SCADA (11) par des données de référence (10) de l'aérogénérateur (2) par l'aérogénérateur (2) ;
b) signature numérique et communication (100) des données SCADA et de référence (10, 11) signées par l'aérogénérateur (2) à un serveur de courtier (3) pour traitement ultérieur et mémorisation ;
c) création d'un jeu de métadonnées (12) à partir des données SCADA et de référence (10, 11) reçues, comprenant des informations à propos de la portée et des propriétés des données SCADA et de référence (10, 11) par le serveur de courtier (3) ;
d) communication (101) du jeu de métadonnées (12) à au moins un client d'utilisateur (4) ;
le procédé étant **caractérisé par** les étapes suivantes :
en cas d'intérêt pour les données SCADA et de référence (10, 11) identifiées par le jeu de métadonnées (12) ;
e) signature numérique du jeu de métadonnées (12) et communication (102) du jeu de métadonnées (12) signé par le client d'utilisateur (4) au serveur de courtier (3) ;
f) création et signature numérique d'un jeu de données de livraison (13) comprenant le jeu de métadonnées (12) signé par le client d'utilisateur (4) et les données SCADA et de référence (10, 11) appartenant au jeu de métadonnées (12) par le serveur de courtier (3) ; et
g) communication du jeu de données de livraison (13) au client d'utilisateur (4).

2. Procédé selon la revendication 1, la signature (2'') des données SCADA et de référence (10, 11) par l'aérogénérateur (2) étant supprimée lors de la création du jeu de données de livraison (13).

3. Procédé selon la revendication 1 ou 2, une communication de jeux de métadonnées (12) non signés et signés sous la forme de jeux de données d'une base de données à registre distribué, de préférence une chaîne de blocs, étant effectuée, auxquels le serveur de courtier (3) et le client d'utilisateur (4) ont accès.

4. Procédé selon la revendication 3, avec la création et la signature du jeu de données de livraison (13), une transaction déposée en tant que contrat intelligent dans la base de données à registre distribué étant exécutée et le jeu de données de livraison (13) n'étant créé et signé qu'en cas de conclusion positive de la transaction.

5. Procédé selon la revendication 4, la transaction étant déclenchée par la communication d'une version (contre-)signée numériquement par le serveur de courtier (3) du jeu de métadonnées (12) signé numériquement par le client d'utilisateur (4).

6. Procédé selon l'une des revendications précédentes, au moins deux jeux de métadonnées (12) étant générées par le serveur de courtier à partir des données SCADA et de référence (10, 11) reçues, avec des informations à propos de la portée et des propriétés respectives des données SCADA et de référence (10, 11), les jeux de métadonnées (12) couvrant des zones partielles différentes des données SCADA et de référence (10, 11) et seules les données SCADA et de référence (10, 11) couvertes par le jeu de métadonnées (12) signé par le client d'utilisateur (4) étant prise en compte lors de la génération d'un jeu de données de livraison (13).

7. Procédé selon la revendication 6, les jeux de métadonnées (12) comportant des informations à propos de l'aérogénérateur (2) duquel sont issues les données SCADA et de référence (10, 11), de la portée des données et/ou de l'intervalle de temps des données SCADA (11) disponibles.

8. Procédé selon l'une des revendications précédentes, les données de référence (10) comportant une identification univoque, la position géographique, le type d'installation et/ou la configuration de base de l'aérogénérateur (2).

9. Procédé selon l'une des revendications précédentes, les données SCADA (11) comportant des valeurs mesurées acquises par l'aérogénérateur (2) et/ou des instructions de commande ou des indications de valeur de consigne externes reçues par l'aérogénérateur (2).

10. Arrangement (1) comprenant un aérogénérateur (2), un serveur de courtier (3) et un client d'utilisateur (4), qui sont configurés de manière appropriée pour mettre en œuvre un procédé selon l'une des revendications précédentes et qui sont en connexion de données entre eux.
